# EUROPEAN PATENT APPLICATION

(11) **EP 4 169 891 A1**
(43) Date of publication of application: **26.04.2023**
(21) Application number: 21830263.6
(22) Date of filing: 22.06.2021
(51) Int. Cl.: C05F 1/00, C05F 17/20

(54) **PROCESS FOR PRODUCING A FERTILIZER COMPOSITION FROM ANIMAL BLOOD WITH HIGH CONTENTS OF ORGANIC CARBON AND FREE NATURAL AMINO ACIDS, PRODUCT OBTAINED AND USE**

(30) Priority: 23.06.2020 BR 102020012852
(71) Applicant: Goncalves, Clenio Antonio, 38.700-062 Patos de MInas (BR); Goncalves, Leandro José, 38.700-062 Patos de Minas (BR); Gonalves, Fernando Vilaca, 38.700-062 Patos de Minas (BR); Junior Goncalves, Antonio, 38.700-062 Patos de Minas (BR)
(72) Inventor: AFONSO, José Adolfo, 38.700-062 Patos de Minas (BR)
(74) Representative: Ferreira Magno, Fernando Antonio
(86) International application number: PCT/BR2021/050268
(87) International publication number: WO 2021/258174

(57) **Abstract**

The present invention is located in the field of industrial biotechnology and sustainable agriculture, referring to a process of renewable origin for the production of fertilizer from by-products of animal origin, with an innovative raw material, animal blood in natura. The invention aims at the use of raw materials such as animal blood, both in natura form and in the form of blood meal, also considering a synergistic mixture of blood meal with in natura blood, to obtain fertilizers with innovative characteristics. The synergy promoted by the stages of the developed process, combined with the qualities of the selected raw materials, promoted the development of products with high levels of free natural amino acids, total organic carbon and organic matter. The developed fertilizer product can be applied in liquid form, as a liquid fertilizer, both in soil and in foliar form, as well as in solid form, after the introduction of a drying step at the end of processing. The product adds, depending on the chemical composition obtained, both fertilizer and soil conditioning agent characteristics. The invention results in sustainable products with high added value.

## Description

### FIELD OF THE INVENTION

The present invention is situated in the field related to chemistry, more particularly to processes for manufacturing fertilizers. Furthermore, the invention is located in the field of sustainable agriculture, referring to a process for obtaining fertilizers and/or compositions with fertilizer characteristics from raw animal blood and blood meal. One of the main aspects of agricultural sustainability promoted by the present invention is related to obtaining a product with fertilizing capacity with a high content of free amino acids and organic carbon. Also, one of the innovative aspects of the development is the use of raw material that promotes the reuse of by-products of animal origin, generating a composition whose compounds are natural and of high added value. Additionally, the basic raw material used is a by-product of animal origin from several species, which can be synergistically associated with raw materials rich in proteins, calcium, phosphorus, natural amino acids, nitrogen and organic matter. All the elements that make up the final product obtained are from a sustainable organic source. It should be noted that the origin of the raw materials does not use heavy metals, with no risk of contamination of the product obtained.

### BACKGROUND OF THE INVENTION

Organ mineral fertilizers are an opportunity for technological innovation, as they allow the use of waste from various agro-industrial sectors to add value to the by-product generated. Therefore, in addition to the present invention providing the development of an innovative product, there is a better use and disposal of by-products of natural animal origin, having plant nutrition as its main target, in order to contribute to the sustainability of agribusiness as a whole.

Despite one of the focus and configurations of the present invention being an organ mineral fertilizer, the developed process enables alternative routes from a single raw material that allow obtaining products in the form of fertilizer compositions that can be added and/or mixed with complementary compositions. Still, it is possible to obtain simple organic fertilizers.

Organic compounds, when available, can promote soil quality and efficiency in plant production, as they influence their chemical, physical and biological attributes. Organic waste, both of animal and vegetable origin, has a very varied composition and can quickly provide some nutrients such as phosphorus and potassium, and others such as nitrogen, depending on the degradation of the compounds (FINATTO, J.; ALTMAYER, T.; MARTINI, M.C. The importance of using organic fertilizer in agriculture. Revista Destaques Acadêmicos, Lajeado, v.5, n.4, p. 85 - 93, 2013.).

Organ mineral fertilizers are produced by combining organic and mineral matter in a balanced way, and can be found commercially with a diversified source of organic raw material. For single, mixed and compound organic fertilizers, as well as organominerals, the flowing product must have at least 3% total organic carbon. In the case of solid, organ mineral product, the compound must have at least 8% of total organic carbon and CTC of 80 mmolc/kg, and for the same product, regarding the use of macronutrients and micronutrients, the amount must be 10 % for isolated primary macronutrients (N, P, K) or in mixtures (NP, PK, NPK or NK), 5% of isolated secondary macronutrients or in their mixtures, 4% of isolated micronutrients or in their mixtures (MINISTRY OF AGRICULTURE, LIVESTOCK AND SUPPLY - MAPA. Normative Instruction SDA No. 25, of July 23, 2009. Rules on specifications and guarantees, tolerances, registration, packaging and labeling of simple, mixed, compound, organ mineral and biofertilizers intended for agriculture. Diário Oficial da União - Section 1. Brazil. 2009).

In this context, it is relevant to consider that the soil is a critical component of the terrestrial biosphere, functioning as an agricultural system and maintenance of environmental quality, with local, regional and global effects. Soil is capable of delaying or increasing the transfer of carbon to the atmosphere, being able to retain material for a longer time, contributing to the mitigation of climate change, in addition to improving its own quality, by increasing aggregation, porosity, infiltration and retention of water, aeration, nitrogen balance, among others.

Organic matter is the component that is most related to soil quality, directly influencing soil attributes, as it improves infiltration and water retention, favors gas exchange between soil and atmosphere, increases microbial activity, increases soil porosity, leaving it less dense and more aggregated, reducing the compaction and erosion of the surface layers of the soil.

It should be noted that in the study of soil organic matter, nitrogen as well as carbon is a relevant element for the process of storing greenhouse gases in the soil. Its highest concentration is in the organic fraction (more than 90%), a relevant reservoir with more readily available forms, such as nitric and ammonia. Nitrogen is one of the most limiting elements for plant productivity, due to the low availability of nitrogen and the great need for this element by plants.

The search for sustainability in agriculture has worked with other important points, in addition to the stock of organic carbon in the soil. One can cite the use of amino acids, for example, which has been used as a source of nutrients, based on fertilization.

The importance of organ mineral fertilizers in the cultivation of vegetables and fruit is known, being a product that has gained space in the national market. In addition, the use of organominerals in association with aspects related to the logistics of production chains can reduce production, transport and application costs in relation to other forms of fertilization.

However, there is no state-of-the-art description of a process as complete as that of the present invention that overcomes all the challenges of producing fertilizer compositions, which can also be organominerals, from animal blood, with positive characteristics in relation to organic carbon in the soil, optimal levels of essential amino acids and optimized process parameters.

The Brazilian patent document PI 780833-5, for example, presents a method for converting blood, animal parts, bone waste or meat remains into useful products, which method comprises the hydrolysis of a substrate with a proteinase, preferably in the presence of urea, in an aqueous hydrolysis medium at a pH value in a region in which the proteinase exhibits sufficient activity, subsequently inactivating the enzyme and processing the hydrolysate. Unlike the present invention, the objective of said process is to obtain high-value albumin products intended for application in cosmetics, fire extinguishing powders and animal feed. In the process described, there are steps that are in no way related to the process presented here, of obtaining a fertilizer product from animal blood. It is also important to note that, in addition to being intended to obtain products other than those of the present invention, in the cited document, one of the central stages of the process, the hydrolysis of blood, is carried out in thick blood, that is, in hemoglobin, and not in fresh blood, as proposed by the present invention. Thus, the innovative raw material animal blood in natura is not used.

It can also be observed that in PI 780833-5, the process includes the addition of urea, ammonium sulfate, acetic acid, which is not consistent with the steps of the invention claimed herein. The examples described denote the option for using thick blood rather than fresh blood, which adds steps to the process in order to make it more expensive or even make it unfeasible if it were - and it is not - aimed at obtaining fertilizers. In said document, the protein is first denatured, centrifuged to separate the plasma and hemoglobin, which are the raw materials for hydrolysis, and obtaining the two distinct final products dehydrated by atomization. It should also be noted that regarding the quality of the final products, the document only reports that they are high value products and does not point out their characteristics, which separates them not only in relation to the classes of products, absolutely different, but also in relation to efficiency and effectiveness of the same.

There are other state-of-the-art documents that address processes comprising the use of by-products of animal origin, although they are diametrically different from those of the process comprised in the present invention. The document US10023887, for example, comprises the use of different by-products of animal origin using a reactor called "nanobubble generator", which in itself differentiates the process proposed here. The same document does not face the challenge of dealing with animal blood in isolation, which requires different stages and the development and construction of mechanisms that allow obtaining a product with high added value, which the same document does not address.

Similarly, document JPH09208351 comprises a comprehensive treatment process for animal by-products with a focus on reducing the bad odor from these materials. There is no particular treatment of animal blood in natura. Document KR20170104760 addresses the same topic with similar objectives as the Japanese document, but comprises a solution that involves solid-liquid separation and spraying steps that are far removed from the solution proposed by the present invention.

In this same area, the Chinese document CN109095966 intends the processing of various organic residues, not specifying, as in the other documents mentioned, the isolated treatment of natural animal blood. The product described by the same document is presented as a foliar fertilizer, and the product obtained through the present invention is not restricted to this application.

The Chinese document CN103130531 discusses synchronized enzymolysis and fermentation processes, using bacteria present in the soil. As in the other processes described, the steps are distinct, in addition to being more complex and costly than those resulting from the development of the present invention.

Also mentioned are the Brazilian documents PI 0704583-2, PI 0503277-6 and BR 112019018387-6, which address methods of manufacturing organ mineral fertilizers from mixtures of different materials, each with particularities of process steps, contents and parameters that distinguish them greatly from the process now claimed.

With regard to the results of using the product obtained in the claimed invention it is relevant to point out that the use of compositions rich in amino acids such as those of the present invention is efficient in reducing the effective amount of fertilizers used, by increasing production and resistance to stress caused by temperature and water deficit.

Certain amino acids can act as plant protectors against the action of mineral salts and other agrochemicals or, on the contrary, increase the absorption and effect of these products. Amino acids can form complexes with cations such as Zn, Cu, Mn and Fe, protecting them and increasing their availability to plants.

One can highlight, among the amino acids, for example, tryptophan, precursor of the most important hormone for root and shoot growth of plants, auxin. Methionine, precursor of ethylene, responsible for fruit maturation. Tyrosine and phenylalanine are the precursors of phenolic compounds involved in plant defense and in the synthesis of lignin, which increases plant lodging resistance.

Glycine is a precursor of chlorophyll synthesis, in addition to acting on the defense mechanisms of cultures. Focused on initial development, valine directly affects seed germination and arginine acts on root development and increases nutrient solubility and absorption, being the main translocation amino acid in the phloem.

It should be noted that the best responses to the use of amino acids in fertilizer compositions, such as that obtained through the process developed, have been in situations of biotic stress, such as those related to the attack of pests and diseases, and abiotic ones, such as nutritional disorders, climate, deficiencies hydric or stress related to the application of pesticides, especially herbicides, giving amino acids the title of anti-stress agents.

In soybean crops, for example, that have symptoms of phytotoxicity, it is possible to obtain a clearly positive result from the spraying of foliar fertilizer with amino acids.

In foliar application, the benefits extend from vegetative development to grain filling, culminating in increased productivity. In addition, the synergism between the application of nutrients and the use of amino acids adds to this practice the benefits of better mineral nutrition for plants. And it should be noted that such synergy is obtained from the use of a single raw material and in order to obtain a natural product, of renewable and sustainable origin.

Additionally, arginine contributed to the increase of chlorophyll in the leaves and delayed aging, thus improving the performance of photosynthesis. Glutamate in soy, for example, indicates that this amino acid provides an increase in the root system, in the nutrient absorption area, as well as in the contact area for plant nodulation to occur.

Proline works as a stress reducer in plants. It amplifies stress tolerance, increases sugar content and carbohydrate reserve, works as a regulator of intracellular osmotic potential by activating stomatal water absorption, stimulates protein synthesis, photosynthesis and increases tolerance to fungal attacks.

Methionine is a precursor of ethylene in higher plants, increasing root growth, favoring the assimilation of nitrates and incorporation of sulfur in the plant. Phenylalanine is an intermediate in the biosynthesis of most phenolic compounds. Tyrosine has an important defense action, since it is a precursor of alkaloids against pathogens. It is an important constituent of proteins that act by converting one type of signal or stimulus into another in the cell. It also functions as a receptor for phosphate groups that are transferred through kinase, responsible for modifying other proteins.

The use of fertilizers such as those of the present invention provides an effect on antioxidant metabolism by increasing the activity of anti-stress enzymes, enzymes of resistance to root development and increased grain production.

The essential amino acids for plants, which promote all the listed benefits, are present in optimal amounts in the final product obtained, from the sustainable and innovative raw material used, without the need to add them individually. The final product is already naturally rich in essential amino acids, as well as already containing the nutrients that meet the quality requirements of the inspection bodies and also the most demanding fertilizing action requirements, in a way that no process in the state of the art obtains or demonstrates to obtain such a joint advantage in a fertilizer product derived from animal blood, mainly animal blood in natura.

In this way, the process and product of the present invention greatly increase the state of the art in the use of amino acids in synergy with fertilizer compounds. The use of the product obtained through the developed process increases the absorption and transport of nutrients, providing high biological availability, high stability and solubility. And, in this way, it is possible to increase the absorption of nutrients via leaves or roots, as well as the transport of nutrients throughout the plant.

It should be noted that the particularization approach of dealing with animal blood, mainly animal blood in natura with a focus on the development of a fertilizer with high added value, with high and specified amounts of total organic carbon and free amino acids, is unprecedented. The development of ideal process steps and parameters to obtain a product that meets the technical requirements demanded by the inspection entities and simultaneously the quality requirements requires significant inventive effort, which resulted in the development of a process that is absolutely superior to the existing alternatives in the state of art and which brings together sufficient innovative characteristics to compose the present application for the privilege of invention.

In addition, the use of a natural raw material, reused from the processing of animals in various industries, means an advance in relation to the origin of synthetic or mineral raw materials commonly used in fertilizer products.

Animal blood, whether in natura or in the form of blood meal, represents, in conjunction with all other process parameters, a substantial advance in the development of fertilizers originating from natural compounds, resulting in an organic carbon content total, organic matter and free natural amino acids not only high, but of absolutely sustainable origin.

### SUMMARY OF THE INVENTION

This fertilizer production process is part of the theme of industrial biotechnology, covering the modern application of biotechnology for the sustainable processing and production of chemical products, fertilizers, materials, fuels, animal nutrition, human nutrition and others. It is a suitable technique to improve the functional properties of proteins, including emulsifying capacity and solubility, in addition to increasing the antioxidant capacity by exposing antioxidant amino acids present in the protein chain. In addition, one of the differentials of the invention is precisely the raw material used, animal blood, by-product that is reused to become a natural source of nutrients for plants, thus being a sustainable process and product that greatly benefits the environment.

Enzymes are considered key elements in biotechnology, as they play crucial roles in chemical reactions in their use as an alternative method in industries. Its use leads to a cleaner technology, consuming little energy and causing minimal environmental impact. In this scenario, enzymatic biotechnology is currently seen as an instrument for industries to find solutions to so many problems experienced today in our society. And the association of enzymatic biotechnology with a natural source of nutrients that represents the animal blood by-product, is an unprecedented synergy.

More particularly, the invention is based on enzymatic processes, in which chemical reactions are carried out in various stages of the process under different conditions of temperature and time, resulting in sustainable products with high added value and with sanitary guarantees, before the sterilization of the final product.

The fertilizer production process proposed herein comprises the use of innovative raw materials, which include: (i) natural or in natura animal blood, which may be of bovine, porcine or poultry origin, with a mixed raw material being possible in relation to such species; and/or (ii) blood meal diluted in water; and/or (iii) blood meal diluted in fresh blood.

Based on the selection of the type of raw material, optimal process parameters were developed to obtain a product that can be used as a fertilizer, whether in powder form, liquid, foliar or in the soil, or as a pre-product or precursor for development of fertilizers added with macronutrients and/or micronutrients or with other elements of interest to the end user.

It should be noted that the main elements of interest to increase the final product are: calcium, magnesium, sulfur, boron, chlorine, cobalt, copper, iron, manganese, molybdenum, nickel, silicon and zinc, but not limited to these.

### BRIEF DESCRIPTION OF THE FIGURES

Since the present invention involves obtaining innovative results from the process developed against the state of the art, it is essential to demonstrate in images the main stages, illustrations of the product and equipment involved, which is done through the figures that integrate the present patent application.

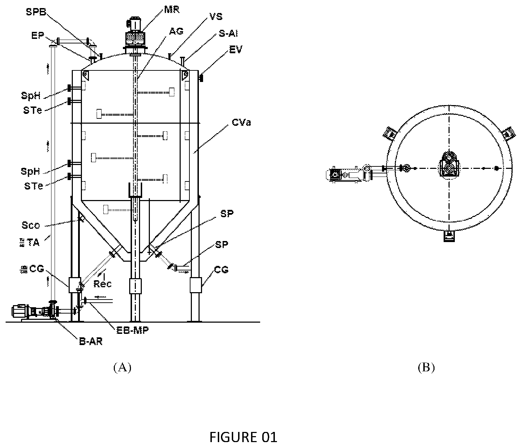

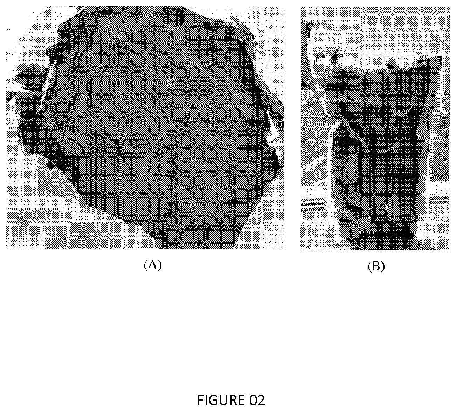

Thus, for a better understanding of the present invention, it was illustrated in Figures 01 to 03, not being the objective of these graphic representations to restrict the macro stages of the process and/or the multiple forms of related execution.

Figure 01 shows an illustration of the enzymatic hydrolysis reactor usually used in the process of the present invention.

In the preferred configuration of the invention, the reactor used should be made of stainless steel, jacketed, heating with steam in the jacket. The internal shaft must be equipped with its own stirrer for perfect homogenization of the solution. Furthermore, it is equipped with the necessary instruments for the operation, such as load cells, thermometers, pH sensors and solenoid valves. pH and temperature sensors are installed at the bottom and top of the reactor; the solenoid valve in the steam inlet network and the load cells are installed on the reactor support feet.

In Figure 01, in (A) you can see the design of the reactor and in (B) the top view in section. And so, in the same figure, we see:
- SPB: Tube Ø1" - Spray Ball.
- EP: Tube Ø3" - Product Entry.
- SpH: pH sensor.
- STe: Temperature Sensor.
- Sco: Tube Ø2" - Condensate Outlet.
- TA: Tube Ø3" - Feeding Tube.
- CG: Load Cell.
- Rec: illustration of the meaning of Recirculation.
- B-AR: Feed Pump and Recirculation for Emulsification.
- EB-MP: Pump Inlet - Raw Material.
- SP: Product Outlet, with a Ø4" tube.
- CVa: Jacket for Steam (jacketed reactor).
- EV: Tube Ø2" - Steam Inlet.
- S-Al: Exit/Relief.
- VS: Safety Valve.
- AG: agitator.
- MR: Motor Reducer.

Figure 02 illustrates the final product obtained in powder form, after drying in a spray dryer, with a granulometry of less than 0.3 mm, in excellent appearance (A) and the final product packaged in liquid form (B).

Figure 03 contains a simplified diagram in the process where the steps are observed, as will be presented in the detailed description of the invention, of
A) SPM - Selection of raw material between (i) blood meal (PM1);
   (ii) in natura animal blood (MP2) or (iii) mixture of in natura animal blood with blood meal (MP1 + MP2).
B) PMPs - Preparation of raw material according to selection, being:
   B1. (i) Dissolving the blood meal with water.
   B2. (ii) Sifting of raw animal blood.
   B3. (iii) Dissolving the blood meal with fresh blood.
C) EM - Emulsification of the obtained solution.
D) RHE - Enzymatic hydrolysis reaction, with parameter adjustment according to one of the three configurations below, in which one of the configurations, D1, D2 or D3, must be chosen to continue the process):
   D1. HAl - Enzymatic hydrolysis in alkaline medium.
   D2. HAc - Enzymatic hydrolysis in acid medium.
   D3. Han - Enzymatic hydrolysis in neutral medium.
E) INA - Enzyme inactivation.
F) EST - Product Sterilization.
G) FI - Filtration.
H) RE - Cooling: in the acidification tank after inactivation and sterilization, the product must be cooled to a temperature of 70 °C.
I) EST - Stabilization: where the pH adjustment can be performed with the use of hydrochloric acid, citric acid, or any usual acid reagent, or even with the optional use of phosphoric acid (AcF), when there is an additional intention to increase the phosphorus content in the final product.
J) ACo - Addition of preservatives: after pH adjustment, during stabilization, add preservative products, such as antifungals and antioxidants in the amount recommended by the product manufacturer.
K) ESTo - Storage; and
L) EM - Packaging.

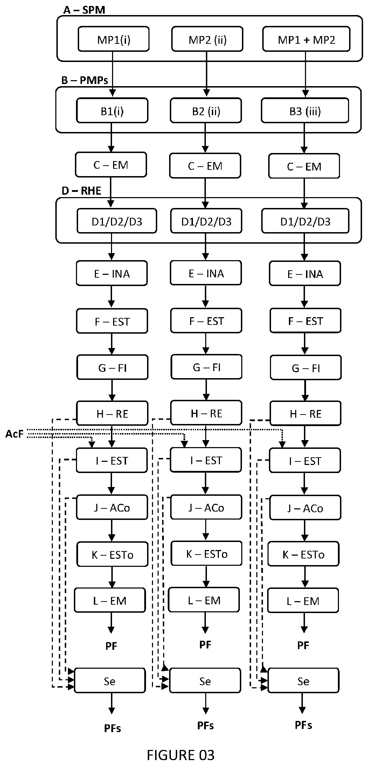

In Figure 03, at the end of stage L - EM (Packaging), we have the fertilizer composition product in liquid form (PF). Still in the case of Figure 03, a drying step in Spray Dryer (Se) is shown, which is activated when the intention is to obtain the product in solid form (PFs), which can occur immediately after the Cooling step (H - RE), Product Sterilization (F - EST) or after Addition of Preservatives (J - AC).

### DETAILED DESCRIPTION OF THE INVENTION

The fertilizer product is made from animal blood by-products, blood of porcine, bovine and/or poultry species. It is important to point out that a mixture of different blood sources can be used in the developed process. Blood is rich in proteins, natural amino acids, nitrogen and organic carbon. The entire process developed sought to maintain balance in optimal processing phases and maximum maintenance of the bioavailability of these components for use in the final product as a composition of fertilizer characteristics.

All raw material is inspected before entering the process, and is tracked in compliance with the requirements of the Ministry of Agriculture, Livestock and Supply, as well as environmental agencies. It is reiterated that heavy metals are not used at the origin of the raw materials, with no risk of contamination of the product.

The collection of blood, the basic raw material for all process routes, is carried out in establishments inspected by a competent body and transported in dedicated tank trucks.

Upon arrival at the factory, the loads are inspected for blood verification and discharge. The blood is then pumped into stainless steel receiving tanks and kept homogenized until processing. As will be detailed, the raw blood is pumped into the reactor where the chemical reactions will take place. This process takes place with indirect steam at different temperature ranges. The manufacturing process is fully automated and closed, preventing manual contact and cross-contamination of raw materials and products.

With regard to the storage of blood, it should be stored in a refrigerator during slaughter at a temperature between 2°C to 5°C and transported at the same temperature to the fertilizer factory for the execution of this production process. Upon reception, the product must be kept at the same temperature, or processed immediately. Cooling preserves the blood by preventing protein deterioration, maintaining natural amino acid values and reducing odors. In the event that there is a refrigerator near the fertilizer factory, the blood can be transported without cooling, in this case, the blood must be preserved by adding a preservative, such as citric acid in the amount of 0.5% of the total weight of the blood in natura.

The period of time between the slaughter of the animals and the start of the hydrolysis process should be a maximum of 24 hours, whether the blood is preserved with citric acid or cooled.

The production areas and equipment receive pre-operational and operational cleaning, following the instructions of the standard hygiene procedures, developed and inspected by the quality control. Hygiene is carried out using efficient products duly authorized by organs competent bodies.

Finally, it should be noted that the finished product is monitored for physical-chemical analyzes of organic matter, NPK, bacteriology, among other parameters, with analysis per production batch, with the analyzes being carried out in the internal laboratory of the production plant and may also be carried out in an external contracted laboratory, depending on the degree of complexity of the analyzes.

In addition to the distinctive features of higher total organic carbon content, organic matter content and free amino acids, there are minimum product guarantees involving a minimum organic carbon value of 3.00% and a minimum macronutrient (NPK) value.

In the plant where the process takes place, there is permanent care for the maintenance of facilities and equipment, changing rooms and sanitary barriers, lighting, ventilation, supply water, waste water and solid waste, pest control, cleaning and sanitation, employee hygiene and health, standardized operating procedures, raw materials, supplies and packaging, temperature control, calibration and measurement, laboratory controls in general and traceability.

Starting from the raw material (i) blood meal, (ii) in natura animal blood or (iii) a mixture of both, the proposed process comprises the dissolution of the blood meal with water in the first case (i) or the sieving/filtration of the animal blood in the second case (ii) or the use of a mixture of sieved/filtered animal blood with blood meal in the third case (iii), and then the enzymatic protein hydrolysis reaction process begins, a chemical reaction catalyzed by an enzyme that uses water to break down a molecule , so proteins are hydrolyzed transforming them into free amino acids under ideal conditions of pH, temperature and time. At the end of the hydrolysis reaction, the temperature is raised to inactivate the enzyme and to eliminate biological contaminants. Then the product is optionally stabilized with phosphoric acid, followed by the addition of antioxidants and antifungals to protect the final product.

If working with fresh blood, before hydrolysis, the blood must be sieved, as indicated, with a sieve with an approximate mesh size of 5.00 mm. The purpose of this preparation is to separate the impurities that contaminate the blood during the slaughter of cattle and pigs, such as hair, pieces of leather, fat and others. In this context, in the slaughter of poultry, for example, it is common for blood to be contaminated with feathers, heads, fat and other unwanted impurities, which must be removed through this pre-hydrolysis step.

In addition, the solution must pass, also prior to hydrolysis, but after the indicated filtration, through an emulsification process. Said process takes place under agitation and recirculation of the product in the reactor itself with a suitable pump. This stage is important for the final product to become uniform, not allowing the formation of phases, so that it does not separate into more than one phase.

It is important to highlight that the reactor used must be made of stainless steel, jacketed, that is, the heating must be with steam in the jacket. It must be equipped with an internal shaft with its own stirrer for perfect homogenization of the solution. Also, the instruments necessary for the operation are: load cells, thermometers, pH sensors and solenoid valves to control the steam in the reactor jacket. The pH and temperature sensors must be installed at the bottom and top of the reactor in order to have a wide process control. In addition, for better steam control in the reactor jacket, a solenoid valve must be installed in the steam inlet network to maintain a constant desired temperature. The load cells must be installed on the reactor support feet so that the raw materials that make up the product formula can be weighed. In this reactor, the protein hydrolysis reactions are carried out, transforming them into amino acids and leaving free other elements such as organic carbon, one of the essential elements of the product obtained.

In this context, this process comprises the steps of:
A) Selection of raw material between (i) blood meal; (ii) raw animal blood or (iii) mixing raw animal blood with blood meal.
B) Preparation of raw material according to selection, being:
   B1. (i) Dissolving the blood meal with water, the blood meal used must contain a minimum of 92% crude protein, a maximum moisture content of 6%, a maximum of 3% mineral matter and pepsin digestibility (1:1000 to 0.2% in 0.075 N HCl) of at least 90%. The dilution proportion must be 60% to 70% of water and 30% to 40% of blood meal, and the dissolution already occurs in the hydrolysis reactor.
   B2. (ii) Sifting/filtration of in natura animal blood, using a sieve of approximately 5.00 mm to eliminate impurities, the blood of which may be from bovine, porcine and poultry species, and subsequent transfer of the blood to the hydrolysis reactors. It is not necessary to add water.
   B3. (iii) Dissolving blood meal with sieved in natura blood, from bovine, porcine and/or poultry species, in the proportion of 60% to 70% of in natura blood and 30% to 40% of blood meal, the dissolution already taking place in the hydrolysis reactor. It is not necessary to add water.
C) Emulsification of the solution obtained, by activating the stirrer, with subsequent use of steam to heat the solution and activating the emulsification pump to recirculate the mixture inside the reactor itself.
D) Enzymatic hydrolysis reaction, with parameter adjustment according to one of the three configurations below, choosing one of them and processing before following the procedures:
   D1. Enzymatic hydrolysis in alkaline medium: the enzyme indicated for the process is alkaline protease, with the amount of enzyme to be added being 0.5% in relation to the total mass to be processed. The enzyme is added when the temperature reaches 40°C, and then kept between 40 and 70°C, preferably at 65°C. As for the pH, it is recommended to keep it between 7.50 and 11.00, with the optimum working range being 8.00 and 9.00, and preferably the pH should be kept close to 8.50. Adjusting the pH is done by adding sodium hydroxide (NaOH) or potassium hydroxide (KOH) to raise it and phosphoric acid to lower it, according to the need, and the reagents must be pumped to the hydrolysis reactor.
   The recommended time for the hydrolysis reaction is from 1 to 5 hours, with an average time of 3 hours for the enzyme to transform proteins into free amino acids.
   D2. Enzymatic hydrolysis in an acid medium: the enzyme indicated for the process is acid protease, with the amount of enzyme to be added being 0.5% in relation to the total mass to be processed. The enzyme is added when the temperature reaches 40°C, and then kept between 40 and 65°C, preferably at 60°C. As for the pH, it is recommended to keep it between 2.00 and 6.00, with the optimum working range being 2.50 and 4.50, and preferably the pH should be kept close to 4.00. Adjusting the pH is done by adding sodium hydroxide (NaOH) or potassium hydroxide (KOH) to raise it and phosphoric acid to lower it, according to the need, and the reagents must be pumped to the hydrolysis reactor. The recommended time for the hydrolysis reaction is from 1 to 5 hours, with an average time of 3 hours for the enzyme to transform proteins into free amino acids.
   D3. Enzymatic hydrolysis in neutral medium: the enzyme indicated for the process is neutral protease, with the amount of enzyme to be added being 0.5% in relation to the total mass to be processed. The enzyme is added when the temperature reaches 40°C, and then kept between 40 and 60°C, preferably at 55°C. As for the pH, it is recommended to keep it between 5.50 and 9.50, with the optimum working range being 6.50 and 7.50, and preferably the pH should be kept close to 7.00. Adjusting the pH is done by adding sodium hydroxide (NaOH) or potassium hydroxide (KOH) to raise it and phosphoric acid to lower it, according to the need, and the reagents must be pumped to the hydrolysis reactor.
   The recommended time for the hydrolysis reaction is from 1 to 5 hours, with an average time of 3 hours for the enzyme to transform proteins into free amino acids.
E) Enzyme inactivation: after the hydrolysis period, it is necessary to raise the process temperature to 90°C for 30 minutes to inactivate the enzyme.
F) Product sterilization: after enzyme inactivation, keep the reactor heated at 90°C for another 30 minutes to eliminate the biological agents, totaling the inactivation and sterilization time of one hour.
G) Filtration: at the end of the hydrolysis process, the product must be filtered and sent to the acidification tank to finish the product.
H) Cooling: in the acidification tank after inactivation and sterilization, the product must be cooled to a temperature of 70 °C.
I) Stabilization: in the stabilization tank, the product must be allowed to cool down to a temperature below 70 °C, in this temperature range adjust the pH between 2.50 to 3.50. The pH correction must be carried out with the addition of phosphoric acid, NaOH or KOH. It is important to keep the pH close to 3.00 for the stability of the product, so that it has more durability, especially in liquid form. If an organ mineral fertilizer is to be obtained as a product, phosphoric acid must be used in this step. If a simple organic fertilizer is to be obtained as a product, phosphoric acid is not used in this step. Hydrochloric acid or citric acid can also be used as acid reagents for pH adjustment up to 3.0.
J) Addition of preservatives: after pH adjustment, during stabilization, add preservative products, such as antifungals and antioxidants in the amount recommended by the product manufacturer.
K) Storage: the product must be stored in stainless steel material tanks.
L) Packaging: the product can be packaged in 50-liter drums, 1,000-liter containers or delivered in bulk in tank trucks.

The final product obtained has a minimum of 11.00% of amino acids and a minimum of 60.00% of organic matter, and these values may be higher depending on the concentration of the final product. In this way, considering the product's profile, there is a wide application for several segments: it can be used as a foliar fertilizer or as a product for soil conditioning and resistance inducer in plants.

Optionally, the process may comprise obtaining fertilizer compost in powder form. Thus, alternatively, after the stabilization step, it is possible to direct the product to a spray drying process in order to obtain a solid, as well as it is possible, optionally, the addition of macro or micronutrients at the end according to the desired application. The solid product obtained has a granulometry of 99% less than 0.3 mm (passed through an ABNT 50 sieve), in the case of the solid form explained here. The drying of the product, in this case, is carried out in the Spray Dryer equipment. The liquid product is pumped to the disk or spray nozzle and then to the drying chamber. The ideal operating temperature in the Spray Dryer's drying chamber is 190 °C to 220 °C at the inlet and 80 °C and 90 °C at the outlet. The combination of the other stages of the process with the temperatures described herein allows obtaining a solid product already with a granulometry of less than 0.3mm and with a humidity of less than 5%, without any need for milling. As commonly used in the industry, the operation of the Spray Dryer relies on the spraying of product particles in its chamber, being subjected to a controlled stream of hot air.

Together with these processes, the vaporization of the water contained in it takes place, and consequently the ultra-fast separation of solids and soluble.

All processes are carried out with minimal degradation of the drying product, as the Spray Dryer places the solvent under a controlled temperature for seconds and this causes the solvent to evaporate instantly with a minimal rise in the temperature of the wet material. And, in the case of the developed process, it is not trivial to use the selected temperatures in question, at the entrance and exit of the drying process, which demonstrated, together with the other process parameters, to be synergistically integrated with the optimal conditions for obtaining a powdered product that does not require grinding and is ready for subsequent filling after cooling to room temperature. The use of the Spray Dryer under these conditions eliminates the occurrence of a negative impact on the chemical and physical properties of the product, and it is even possible to improve these properties since the procedure stabilizes the final product obtained in a certain way.

Still in the case of the solid product in powder form, the process described takes place in the stabilization stage still in the liquid state as explained, considering the pH range (3.00) with adjustment with phosphoric acid, preservatives and antifungals. However, in the case of powdered fertilizer, the aforementioned adjustment to a pH equal to 3.00 is optional, and thus the addition of phosphoric acid is also optional, that is, if you want to make a product with a low phosphorus content, it is not necessary. add phosphoric acid. Because the humidity is low, the product will have a long shelf life without the need to adjust the pH to 3.00. However, even without this need, if you want a product previously enriched with phosphorus, you can proceed with the stabilization step using phosphoric acid as already described.

All descriptions presented herein are illustrative and illustrative of the innovative development that represents the process, product and use herein claimed. Therefore, there should be no restriction of the process to the elements described herein. It is a process of renewable, sustainable origin, which transforms products that would be discarded into base material to obtain compositions rich in essential amino acids for plants, of natural origin, mainly based on the use of in natura animal blood.

As an alternative configuration of the invention, it should be mentioned that the enzymatic hydrolysis reactor employed is not limited to operation at atmospheric pressure. In other words, it is possible to use a pressurized environment to obtain the benefits arising from the optimization of the enzymatic hydrolysis reaction. Still as alternative configurations of the present invention, it is possible to use advanced techniques in conjunction with the enzymatic hydrolysis reaction, such as those related to the exposure of the reaction system to ultrasonic waves.

It is important to point out that the process is free of heavy metals, which eliminates the risk of contamination in the final product. Table 1, below, shows the analysis of the sample of the product obtained regarding the content of heavy metals, which corroborates this assertion. The sample in question comprises the liquid form of the final product which, of course, corresponds to the alternative solid form.

**Table 1 - Analysis of Heavy Metals.**

| **Essay** | **Result** | **Unit** | **LQ** |
|---|---|---|---|
| Cadmium | <LQ | mg/kg | 0.09 |
| Lead | <LQ | mg/kg | 0.38 |
| Chrome | <LQ | mg/kg | 0.3 |
| Mercury | <LQ | mg/kg | 0.1 |
| Arsenic | <LQ | mg/kg | 0.3 |

With regard to the organic matter content, mainly, as well as the other physicochemical characteristics of the product obtained through the developed process, Table 2, below, contains the test report of a sample comprising the complete analysis + C/N (via soil). The sample in question comprises the liquid form of the final product obtained from the route that employs in natura blood only (ii), in this case being applied as a liquid fertilizer via the soil.

**Table 2 - Test Report - Complete Analysis + C/N (From Soil).**

| **Essay** | **Result** | **Unit** | **LQ** |
|---|---|---|---|
| Nitrogen | 1.14 | % | - |
| Total Phosphorus | 5.13 | % | - |
| Potassium (HNO3 + HClO4) | 0.06 | % | - |
| Calcium (HNO3 + HClO4) | 0.06 | % | - |
| Magnesium (HNO3 + HClO4) | 0.03 | % | - |
| Copper (HNO3 + HClO4) | 0 | ppm | - |
| Manganese (HNO3 + HClO4) | 0 | ppm | - |
| Iron (HNO3 + HClO4) | 249.26 | ppm | - |
| Zinc (HNO3 + HClO4) | 28.68 | ppm | - |
| Aluminum (HNO3 + HClO4) | 449.42 | ppm | - |
| Sulfur (SO4) | 0.04 | % | - |
| Sodium (HNO3 + HClO4) | 0.62 | % | - |
| Boron | 0 | % | - |
| Cobalt (HNO3 + HClO4) | 0 | ppm | - |
| Molybdenum (HNO3 + HClO4) | 90.27 | ppm | - |
| **Organic Carbon** | **8.57** | **%** | **0.44** |
| **C/N ratio** | **8** | **-** | **-** |
| Density | 1.08 | g/cm³ | - |
| Humidity (65°C) | 79.38 | % | - |
| **Organic Matter** | **66.14** | **%** | - |
| Ashes | 33.86 | % | - |

It is also important to observe the proof of free amino acids in the product obtained, which is confirmed by means of the analyzes presented in Table 3, below. The sample analyzed in Table 3 comprises the final product in its liquid form, in the form of amino acid foliar fertilizer, obtained from the route with fresh blood (ii).

**Table 3 - Test Report - Amino Acid Foliar Fertilizer Sample - Aminogram**

| **Essay** | **Result** | **Unit** |
|---|---|---|
| Aspartic Acid | 1.06 | % |
| Glutamic Acid | 0.89 | % |
| Serine | 0.54 | % |
| Glycine | 0.48 | % |
| Histidine | 0.67 | % |
| Taurine | Not Detected | % |
| Arginine | 0.39 | % |
| Threonine | 0.52 | % |
| Alanine | 0.93 | % |
| Proline | 0.46 | % |
| Tyrosine | 0.33 | % |
| Valine | 0.87 | % |
| Methionine | 0.09 | % |
| Cystine | 0.39 | % |
| Isoleucine | 0.12 | % |
| Leucine | 1.40 | % |
| Phenylalanine | 0.76 | % |
| Lysine | 1.04 | % |
| Tryptophan | 0.22 | % |
| **Sum of Amino Acids** | **11.16** | % |
| Crude Protein | 13.60 | % |
| Nitrogen | 2.18 | % |
| Mineral Matter | 5.89 | % |
| Calcium | 100.00 | mg/kg |
| Phosphor | 1,000.00 | mg/kg |
| Magnesium | 29.00 | mg/kg |
| Sodium | 3,862.00 | mg/kg |
| Potassium | 473.00 | mg/kg |
| Copper | < 2.00 | mg/kg |
| Iron | 31.21 | mg/kg |
| Manganese | < 2.00 | mg/kg |
| Zinc | 4.98 | mg/kg |
| Sulfur | 1,530.00 | mg/kg |
| Boron | Not Detected | mg/kg |
| Residue insoluble in KCl | 0.35 | % |

In addition to the liquid form, as shown, at the end of the process it is possible to direct to drying and thus obtain a powdered product. Compared to liquid product, shown in Table 3, the powder product has an aminogram richer in free amino acids, reaching levels that can reach over 80%, demonstrating that it is a fertilizer, with characteristics of a soil conditioner, of high efficiency. Table 4 shows the aminogram for a sample of the final hydrolyzed blood product obtained from the route that uses only in natura blood (ii), after drying in a Spray Dryer. It should be noted that in alternative and non-limiting configurations of the invention, the use of Drum Dryers is also possible.

**Table 4 - Test Report - Blood Hydrolysate - Blood Powder Spray Dryer.**

| **Essay** | **Result** | **Unit** |
|---|---|---|
| Aspartic Acid | 8.97 | % |
| Glutamic Acid | 7.89 | % |
| Serine | 4.09 | % |
| Glycine | 3.18 | % |
| Histidine | 4.52 | % |
| Taurine | Not Detected | % |
| Arginine | 2.89 | % |
| Threonine | 3.62 | % |
| Alanine | 5.91 | % |
| Proline | 3.36 | % |
| Tyrosine | 2.24 | % |
| Valine | 6.34 | % |
| Methionine | 1.09 | % |
| Cystine | 0.76 | % |
| Isoleucine | 1.07 | % |
| Leucine | 8.86 | % |
| Phenylalanine | 4.86 | % |
| Lysine | 7.38 | % |
| Tryptophan | 1.34 | % |
| **Sum of Amino Acids** | **78.37** | % |
| Moisture and Volatiles | 3.49 | % |
| Crude Protein | 82.79 | % |
| Ethereal Extract by Acid Hydrolysis | 1.52 | % |
| Gross Fiber | 0.39 | % |
| Digestibility in Pepsin 0.002% | 99.21 | % |
| Mineral Matter | 4.53 | % |
| Calcium | 0.04 | % |
| Phosphor | 0.23 | % |

Table 5 shows the complete analysis of the same product presented in Table 4, a sample of the hydrolyzed blood product obtained from the route that uses only in natura blood (ii), after drying in a Spray Dryer.

**Table 5 - Test Report - Complete Analysis + CTC, CRA, Corg, CE, GRAN (Soil Via) - Blood Hydrolysate - Blood Powder Spray Dryer - Solo Via.**

| **Essay** | **Result** | **Unit** | **LQ** |
|---|---|---|---|
| Nitrogen | 9.33 | % | - |
| Total Phosphorus | 1.28 | % | - |
| Potassium (HNO3 + HClO4) | 0.37 | % | - |
| Calcium (HNO3 + HClO4) | 0.04 | % | - |
| Magnesium (HNO3 + HClO4) | 0.03 | % | - |
| Copper (HNO3 + HClO4) | 0 | ppm | - |
| Manganese (HNO3 + HClO4) | 0 | ppm | - |
| Iron (HNO3 + HClO4) | 0.19 | % | - |
| Zinc (HNO3 + HClO4) | 48.23 | ppm | - |
| Aluminum (HNO3 + HClO4) | 0 | ppm | - |
| Sulfur (SO4) | 0.01 | % | - |
| Sodium (HNO3 + HClO4) | 1.42 | % | - |
| Boron | 0.01 | % | - |
| Cobalt (HNO3 + HClO4) | 16.54 | ppm | - |
| Molybdenum (HNO3 + HClO4) | 71.75 | ppm | - |
| **Organic Carbon** | **43.76** | **%** | **0.44** |
| **C/N ratio** | **5** | **-** | **-** |
| Cation Exchange Capacity | 355 | mmolc/kg | |
| Water Holding Capacity | 74.01 | % | |
| Density | 0.66 | g/cm³ | - |
| Hydrogenionic Potential (CaCl2) | 6.3 | - | |
| Humidity (65°C) | 2.21 | % | - |
| **Organic Matter** | **94.14** | % | - |
| Ashes | 4.86 | % | - |
| Sieve ABNT No. 20 (0.84mm) | 0 | % | - |
| Sieve ABNT No. 50 (0.30mm) | 0.08 | % | - |
| Background | 99.92 | % | - |
| Electrical Conductivity 1% | 1.04 | mS/cm | - |
| Saline Index | 9.39 | % | - |

Contrasting Table 5 with the net product (Table 2), there is a maintenance and increase of important fertilizer characteristics, with a significantly high content of organic carbon, high water retention capacity and with an organic matter content that can reach values above 95%. Complementarily, Table 6 presents the same product as in Tables 4 and 5, but with the analysis related to foliar application.

**Table 6 - Test Report - Complete Analysis + C/N + CTC + C + GRAN (Folear Route) - Blood Hydrolysate - Blood Powder Spray Dryer - Foliar Route.**

| **Essay** | **Result** | **Unit** | **LQ** |
|---|---|---|---|
| Nitrogen | 9.33 | % | - |
| Phosphorus (sol. water) | 0.58 | % | - |
| Potassium (sol. water) | 0.22 | % | - |
| Calcium (sol. water) | 538.92 | ppm | - |
| Magnesium (sol. water) | 251.22 | ppm | - |
| Sulfur (SO4) | 0.01 | % | - |
| Sodium (sol. water) | 1.37 | % | |
| Boron | 0.05 | % | |
| Copper (sol. water) | 0 | ppm | |
| Iron (sol. water) | 78.4 | ppm | - |
| Manganese (sol. water) | 0 | ppm | - |
| Zinc (sol. water) | 0 | ppm | - |
| Aluminum (sol. water) | 0 | ppm | - |
| Cobalt (HNO3 + HClO4) | 16.54 | ppm | - |
| Molybdenum (HNO3 + HClO4) | 61.2 | ppm | - |
| **Organic Carbon** | **46.31** | **%** | **0.44** |
| **Organic Matter** | **95.16** | **%** | **-** |
| **C/N ratio** | **5** | **-** | **-** |
| Humidity (65°C) | 2.21 | % | - |
| Cation Exchange Capacity | 370 | mmolc/kg | |
| Water Holding Capacity | 74.01 | % | |
| Electrical Conductivity 1% | 1.03 | mS/cm | - |
| Electrical Conductivity NaNO3 1% | 11.07 | mS/cm | |
| Saline Index | 9.3 | % | - |
| Passing Sieve ABNT No. 10 (2mm) | 100 | % | - |
| Passing Sieve ABNT No. 20 (0.84mm) | 100 | % | - |
| Passing Sieve ABNT No. 50 (0.30mm) | 99.92 | % | - |
| Hydrogenionic Potential (CaCl2) | 6.3 | - | |

As for the product obtained through the process route that uses raw material blood meal diluted in water (i), Tables 7 and 8 present the main characteristics of the fertilizers obtained, in liquid form, considering the foliar application (Table 7) and soil application (Table 8).

**Table 7 - Test Report - Complete Analysis + C/N (Foliar Route) - Route of blood meal diluted in water (i).**

| **Essay** | **Result** | **Unit** | **LQ** |
|---|---|---|---|
| Nitrogen | 2.13 | % | |
| Phosphorus (sol. water) | 0 | % | - |
| Potassium (sol. water) | 382.75 | ppm | - |
| Calcium (sol. water) | 343.67 | ppm | - |
| Magnesium (sol. water) | 56.76 | ppm | - |
| Sulfur (SO4) | 0.07 | % | - |
| Sodium (sol. water) | 0.23 | % | - |
| Boron | 0.04 | % | - |
| Copper (sol. water) | 0 | ppm | - |
| Iron (sol. water) | 0 | ppm | - |
| Manganese (sol. water) | 0 | ppm | - |
| Zinc (sol. water) | 49.44 | ppm | - |
| Aluminum (sol. water) | 320 | ppm | - |
| Cobalt (sol. water) | 3.66 | ppm | - |
| Molybdenum (sol. water) | 187.87 | ppm | - |
| Hydrogen Potential | 2.1 | - | - |
| Density | 1.1 | g/cm³ | - |
| **Organic Carbon** | **7.33** | **%** | **0.44** |
| **Organic Matter** | **79.32** | **%** | **-** |
| **C/N ratio** | **3** | **-** | **-** |
| Humidity (65°C) | 57.1 | % | - |

**Table 8 - Test Report - Complete Analysis + C/N (Via Soil) - Route of blood meal diluted in water (i).**

| **Essay** | **Result** | **Unit** | **LQ** |
|---|---|---|---|
| Nitrogen | 2.13 | % | |
| Total Phosphorus | 7.7 | % | - |
| Potassium (HNO3 + HClO4) | 0.04 | % | - |
| Calcium (HNO3 + HClO4) | 0.04 | % | - |
| Magnesium (HNO3 + HClO4) | 0.08 | % | - |
| Copper (HNO3 + HClO4) | 70.94 | ppm | |
| Manganese (HNO3 + HClO4) | 0 | ppm | |
| Iron (HNO3 + HClO4) | 314.29 | ppm | |
| Zinc (HNO3 + HClO4) | 53.89 | ppm | - |
| Aluminum (HNO3 + HClO4) | 507.5 | ppm | - |
| Sulfur (SO4) | 0.07 | % | - |
| Sodium (HNO3 + HClO4) | 0.25 | % | - |
| Boron | 0.04 | % | - |
| Cobalt (HNO3 + HClO4) | 27.22 | ppm | - |
| Molybdenum (HNO3 + HClO4) | 497.95 | ppm | - |
| **Organic Carbon** | **7.33** | **%** | **0.44** |
| **C/N ratio** | **3** | **-** | **-** |
| Density | 1.1 | g/cm³ | - |
| Humidity (65°C) | 57.1 | % | - |
| Organic Matter | 83.76 | % | - |
| Ashes | 16.24 | % | - |

The presented results confirm that the developed process route generates a differentiated product with a wide range of applications depending on the process parameters.

The product with fertilizer characteristics in liquid form, obtained mainly through routes that use blood meal as raw material (i) or fresh blood (ii) has as central characterizing elements an organic matter content between 60 and 90% and a total organic carbon value between 7 and 10%, and the minimum content of free amino acids in this form of the product is 11%. Even in the case of the liquid form, it should be noted that the final product has naturally high levels of molybdenum, iron and zinc, derived from the raw materials used, without any need for additives to these elements.

In the case of opting for the drying route of the product, obtaining a solid fertilizer with a granulometry 99% smaller than 0.30 mm, the main characteristics of the product are a minimum amino acid content of 78%, a minimum organic matter content of 94% and a minimum total organic carbon content of 40%, both in foliar and soil applications. Additionally, the powdered solid fertilizer in question comprises a minimum macronutrient (NPK) content of 10%.

Two equally relevant differentiators include (a) presence of nitrogen and phosphorus, and for higher levels of phosphorus in the final product, the process route that uses phosphoric acid in the stabilization step must be used, as well as (b) essential amino acids for physiology and nutrition of plants in optimal levels, such as arginine, proline, phenylamine, tryptophan and tyrosine.

Taking into account the possibility of additives to the final product, in one of the alternative configurations of the invention, the following nutrients can be added, with their respective minimum total contents for application in the soil of: Ca (1% in the solid form of the fertilizer and 0.5% in the fluid form); Mg (1% in the solid form of the fertilizer and 0.5% in the fluid form); S (1% in the solid form of the fertilizer and 0.5% in the fluid form); B (0.03% in the solid form of the fertilizer and 0.01% in the fluid form); Cl (0.1% in the solid form of the fertilizer and 0.1% in the fluid form); Co (0.005% in solid fertilizer form and 0.005% in fluid form), Cu (0.05% in solid fertilizer form and 0.05% in fluid form), Fe (0.2% in solid fertilizer form and 0.1% in fluid form), Mn (0.05% in solid fertilizer form and 0.05% in fluid form), Mo (0.005% in solid fertilizer form and 0.005% in fluid form), Ni (0.005 % in solid fertilizer form and 0.005% in fluid form), Si (1% in solid fertilizer form and 0.5% in fluid form), Zn (0.1% in solid fertilizer form and 0.05% in fluid form). One or more of the listed nutrients may be added.

In the case of foliar application, fertigation and hydroponics, the minimum total soluble content in water of additives, which may be one or more of the additives described below, must be: Ca (0.5% in solid fertilizer form and 0.3% in fluid form), Mg (0.5% in solid fertilizer form and 0.3% in fluid form), S (0.5% in solid fertilizer and 0.3% in fluid form), B (0.02% in solid fertilizer form and 0.01% in fluid form), Cl (0.1% in solid fertilizer form and 0.1% in fluid form), Co (0.005% in solid fertilizer form and 0.005% in fluid form), Cu (0.05% in solid fertilizer form and 0.05% in fluid form), Fe (0.1% in solid fertilizer form and 0.02% in fluid form), Mn (0.1% in solid fertilizer form and 0.02% in fluid form), Mo (0.02% in solid fertilizer form and 0.005% in fluid form), Ni (0.005% in solid fertilizer form and 0.005% in fluid form), Si (0.5% in solid fertilizer form and 0.05% in fluid form), Zn (0.1% in fertilizer solid and 0.05% in fluid form).

In an alternative configuration of the invention, the final powder product obtained after drying in a Spray Dryer, given its characteristics, mainly of high levels of amino acids, can be used in animal feed and nutrition and not just for plant nutrition. The sanity of the entire process, in addition to the characteristics attributed to the product resulting from all stages of the process, enable the powder product obtained to be used as a composition element for animal nutrition.

## Claims

1. Production process of fertilizer composition from animal blood with high levels of organic carbon and free natural amino acids **characterized in that** comprising the steps of selecting the raw material from the group consisting of blood meal, in natura animal blood, and a mixture of in natura animal blood with blood meal;
A. selection of raw material from the group consisting of
(i) blood meal,
(ii) raw animal blood, and
(iii) mixture of raw animal blood with blood meal;
B. preparation of the selected raw material, said preparation corresponding to the raw material defined and chosen from the group consisting of
B1. dissolution of blood meal with a minimum crude protein content of 92% (i) with water, in the proportion of 60% to 70% of water and 30% to 40% of blood meal, said dissolution being processed in the hydrolysis reactor(s),
B2. sieving/filtration of in natura animal blood (ii) through a 5.0 mm sieve, without adding water and transferring to the hydrolysis reactor(s), and
B3. dissolution of blood meal with a minimum crude protein content of 92% with fresh blood sieved through a 5.0 mm sieve (iii) in the proportion of 60% to 70% of in natura blood and 30% to 40% of blood meal, said dissolution being processed in the hydrolysis reactor without the addition of water;
C. emulsification of the solution obtained in (B) with activation of the stirrer, subsequent heating of the solution and activation of the emulsification pump recirculating the mixture inside each hydrolysis reactor;
D. enzymatic hydrolysis, the reaction parameters being independent of the raw material used and selected from the group of configuration sets consisting of
D1. use of alkaline protease enzyme, added to each hydrolysis reactor in a proportion of 0.5% in relation to the total mass to be processed under a temperature of 40°C in the reactor, said temperature being maintained between 40 and 70°C and pH maintained between 8.00 and 9.00, said reaction medium being maintained for 1 to 5 hours, preferably for 3 hours,
D2. use of acid protease enzyme, added to each hydrolysis reactor in a proportion of 0.5% in relation to the total mass to be processed under a temperature of 40°C in the reactor, said temperature being maintained between 40 and 65°C and pH maintained between 2.50 and 4.50, said reaction medium being maintained for 1 to 5 hours, preferably for 3 hours,
D3. use of neutral protease enzyme, added to each hydrolysis reactor in a proportion of 0.5% in relation to the total mass to be processed under a temperature of 40°C in the reactor, said temperature being maintained between 40 and 60°C and pH maintained between 6.50 and 7.50, said reaction medium being maintained for 1 to 5 hours, preferably for 3 hours,
E. enzyme inactivation by raising the process temperature in each hydrolysis reactor to 90°C for a period of 30 minutes;
F. sterilization of the product obtained while maintaining the heating in (E), of 90 °C, for another 30 minutes;
G. product filtration and transfer to acidification tank;
H. product cooling up to 70°C in an acidification tank;
I. stabilization of the product under temperature reduction to values below 70°C and at a pH of 2.50 to 3.50;
J. addition of preservatives, antifungals and antioxidants;
K. storage in stainless steel material tanks; and
L. packaging in 50-liter drums, 1,000-liter containers or bulk shipping in tank trucks.

2. Process according to claim 1, **characterized in that** the use, in the enzymatic hydrolysis step (D), of a stainless-steel jacketed reactor, heating with steam in the jacket, equipped with an internal shaft with its own stirrer (AG) and load cells (CG) on the support feet, with the thermometers (STe) and pH sensors (SpH) positioned on the upper and lower part of the reactor body and the solenoid valves (VS) on the steam inlet network.

3. Process according to claim 1 **characterized in that** the use of sodium hydroxide, potassium hydroxide, hydrochloric acid, citric acid and/or and phosphoric acid in the necessary pH adjustment steps, with said reagents pumped to each hydrolysis reactor.

4. Process according to claim 1, **characterized in that** the use of hydrochloric acid, citric acid and/or phosphoric acid in the product stabilization step (I - EST).

5. Process according to claim 4, **characterized in that** the use of phosphoric acid in the product stabilization step (I - EST).

6. Process according to claim 1 **characterized in that** the liquid obtained after the cooling step (H - RE) or after the product stabilization step (I - EST) or after the addition of preservatives, antifungals and antioxidants (J - ACo) be subjected to the drying stage (Se) in a Spray Dryer under a temperature of 190 °C to 220 °C at the entrance and 80 °C and 90 °C, with a final target humidity of less than 3%, with the granulometry of the product corresponding to 99% less to 0.3mm.

7. Process according to claim 1, **characterized in that** it comprises steps of adding macronutrients and/or micronutrients, one or more being selected from the group consisting of calcium, magnesium, sulfur, boron, chlorine, cobalt, copper, iron, manganese, molybdenum, nickel, silicon and zinc.

8. Fertilizer composition **characterized in that** being obtained through any of the processes defined in claims 1 to 7.

9. Fertilizer composition according to claim 8, **characterized in that** it is liquid and comprises molybdenum, iron and zinc and a minimum organic carbon content of 3%, a minimum macronutrient content (NPK) of 3%, a minimum content of free amino acids of 11%, a minimum content of organic matter of 60%, and total organic carbon content of 7 to 10%.

10. Fertilizer composition according to claim 8, **characterized in that** it is solid in powder form, has a granulometry of less than 0.3mm, comprises a minimum macronutrient content (NPK) of 10%, a minimum amino acid content of 78%, a minimum organic matter content of 94% and minimum organic carbon content of 40%.

11. Fertilizing composition **characterized in that** being obtained from raw animal blood or blood meal or from a mixture of raw animal blood and blood meal.

12. Use of the fertilizing composition obtained according to any of the preceding claims **characterized in that** it is used as a liquid foliar fertilizer, as a soil conditioning agent, as a powder fertilizer and/or as a fertilizer pre-product.

13. Use of composition obtained according to any of the preceding claims **characterized in that** an ingredient in the production process of composition and/or supplement for animal nutrition.
